# EUROPÄISCHE PATENTSCHRIFT

(11) **EP 2 995 930 B1**
(45) Veröffentlichungstag und Bekanntmachung des Hinweises auf die Patenterteilung: **18.12.2019**
(21) Anmeldenummer: 15184416.4
(22) Anmeldetag: 09.09.2015
(51) Int. Cl.: G01N 17/02

(54) **VERFAHREN ZUR ERMITTLUNG EINES ZUSTANDS EINES ELEKTRISCH LEITFÄHIGEN UND DURCH KATHODISCHEN KORROSIONSSCHUTZ GESCHÜTZTEN OBJEKTS UND VORRICHTUNG ZUR ERMITTLUNG DES ZUSTANDS**
METHOD FOR DETERMINING A STATE OF AN ELECTRICALLY CONDUCTIVE OBJECT PROTECTED BY CATHODIC CORROSION PROTECTION AND DEVICE FOR DETERMINING THE CONDITION OF IT
PROCEDE DE DETERMINATION D'UN ETAT D'UN OBJET ELECTROCONDUCTEUR PROTEGE CONTRE LA CORROSION CATHODIQUE ET DISPOSITIF DE DETERMINATION DE L'ETAT

(30) Priorität: 12.09.2014 DE 102014218324
(43) Veröffentlichungstag der Anmeldung: 16.03.2016
(73) Patentinhaber: EnBW Energie Baden-Württemberg AG, 76131 Karlsruhe (DE)
(72) Erfinder: Müller, Matthias, 75217 Birkenfeld (DE); Deiss, Rainer, 70372 Stuttgart (DE)
(74) Vertreter: DREISS Patentanwälte PartG mbB

(56) Entgegenhaltungen:
- EP-B1- 0 560 443
- DE-A1-102005 036 508
- DE-B4-102010 021 992
- US-A- 4 940 944

## Beschreibung

Die Erfindung betrifft ein Verfahren zur Ermittlung eines Zustands eines elektrisch leitfähigen und durch kathodischen Korrosionsschutz geschützten Objekts nach dem Oberbegriff des Anspruchs 1 sowie eine Vorrichtung zur Ermittlung eines Zustands eines elektrisch leitfähigen und durch kathodischen Korrosionsschutz geschützten Objekts nach einem nebengeordneten Anspruch.

Es ist bekannt, elektrisch leitfähige Objekte, beispielsweise eine Stahlrohrleitung, die im Erdreich verlegt ist, mit einem Schutzstrom zu beaufschlagen. Entsprechende Schutzvorrichtungen zum kathodischen Korrosionsschutz sind bekannt.

Aus der DE 10 2010 021 992 B4 ist ein Verfahren zur Erkennung geringfügiger Änderungen des elektrischen Umhüllungswiderstandes von in Erde oder in einem Gewässer verlegten und kathodisch vor Korrosion geschützten Objekten aus Stahl bekannt.

DE 10 2005 036 508 A1 offenbart ein Verfahren zur Überwachung von Beschichtungsdefekten in einem definierten Abschnitt einer Erd- oder Wasser-verlegten beschichteten Rohrleitung. Ein Signalverlauf wird an zwei Überwachungseinheiten erfasst und an eine zentrale Überwachungsstelle übermittelt. Eine Wellenform eines Wechselstromsignals wird in beiden Überwachungseinheiten erfasst und das zeitabhängige in ein frequenzabhängiges Signal umgewandelt. Anschließend wird aus dem frequenzabhängigen Signal eine Dämpfung von Frequenzamplituden ermittelt. Die ermittelte Dämpfung wird mit einer zuvor ermittelten Dämpfung eines Vergleichssignals verglichen. In bestimmten Zeitabständen werden Messungen durchgeführt und aus dem Grad einer zeitlichen Änderung von Dämpfungsabweichungen lässt sich ermitteln, ob ein Beschichtungsdefekt an der Rohrleitung vorliegt.

US 4,940,944 offenbart einen cathodic protection analyzer.

Somit ist es Aufgabe der Erfindung, den Zustand des elektrisch leitfähigen und durch kathodischen Korrosionsschutz geschützten Objekts besser zu erkennen.

Die der Erfindung zugrunde liegende Aufgabe wird gemäß einem Verfahren nach dem Anspruch 1 sowie gemäß einer Vorrichtung nach einem nebengeordneten Anspruch gelöst. Vorteilhafte Weiterbildungen sind in den Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Durch das Messen eines elektrischen Prüfsignals bezüglich des Objekts und dem Ermitteln eines Zustands des Objekts in Form einer kurzfristigen hochohmigen Erdung des Objekts in Abhängigkeit von einem zeitlichen Verlauf eines Frequenzspektrums des elektrischen Prüfsignals wird die Erkennung und Ermittlung eines bestimmten Zustands des elektrisch leitfähigen und durch kathodischen Korrosionsschutz geschützten Objekts wesentlich verbessert. Insbesondere kann durch die Beobachtung des Frequenzspektrums über der Zeit eine frequenzspezifische Eigenschaft beobachtet werden, ohne dass Störsignale einen negativen Einfluss auf die Zustandsermittlung haben. Vorteilhaft wird dadurch die Zustandsermittlung sicherer und ein Betrieb des Objekts insbesondere einer Stahlrohrleitung wird sicherer. Insbesondere der Problemkomplex eines Baggerangriffs an ein Stahlrohr, was zur Zerstörung des Stahlrohrs und zur Gefährdung von Mensch und Umwelt führen kann, kann wirksam erkannt und entsprechend können Sicherheitsmaßnahmen umgesetzt werden.

Darüber hinaus können alle üblichen Messgrößen des kathodischen Korrosionsschutzes, die für den Nachweis der Wirksamkeit des Schutzes gemessen und ausgewertet werden müssen und im einschlägigen Regelwerk aufgeführt werden, vorteilhaft mit derselben Auswertemethode in einer weitaus genaueren Art erfasst und bewertet werden. Alle diese Messgrößen beinhalten bedingt durch die physikalischen Abhängigkeiten und das Ohm'sche Gesetz das Frequenzmuster des Prüfsignals. Diese gesamtheitliche Auswertung ermöglicht eine verbesserte Erkennung von Fremdkontakten wie Baggerangriffe und eine weitaus detailliertere Darstellung aller Vorgänge am Schutzobjekt als es z.Z. im Bereich des kathodischen Korrosionsschutzes üblich ist. Zu diesen Messgrößen gehören zusätzlich das Einschaltpotential, Ausschaltpotential, alle elektrischen Potentiale und Spannungen an der Anode und den Bezugselektroden, die für die Messungen Verwendung finden. Das Einschaltpotential ist die gemessene elektrische Spannung zwischen Schutzobjekt und einer Bezugselektrode während der Schutzstromeinspeisung. Das Ausschaltpotential entspricht der Messung des Einschaltpotentials, ohne Schutzstromeinspeisung. Das Anodenpotential ist die elektrische Spannung zwischen Schutzobjekt und Anode. Weiterhin kann bei jeder gemessenen Spannung und jedem gemessenen Strom das Frequenzspektrum ausgewertet werden, um die Störeinflüsse, die auf das System einwirken zu ermitteln und zu bewerten. Mithin können auch das Einschaltpotential und das Ausschaltpotential als Prüfsignal verwendet werden.

Der die kurzfristige hochohmige Erdung des Objekts wird in Anhängigkeit von einem zeitlichen Verlauf einer Amplitude im Bereich einer Prüffrequenz des Frequenzspektrums des elektrischen Prüfsignals ermittelt. Mithin kann die Amplitude eines Prüfsignals mit der Prüffrequenz genauer analysiert werden.

Die kurzfristige hochohmige Erdung des elektrisch leitfähigen und durch kathodischen Korrosionsschutz geschützten Objekts wird in Abhängigkeit von einem Überschreiten eines Amplitudenschwellwerts durch die Amplitude ermittelt. Damit wird ein einfacheres Verfahren bereitgestellt, mit dem beispielsweise ein Baggerangriff an ein entsprechend überwachtes Stahlrohr sicher erkannt werden kann.

In einer vorteilhaften Ausführungsform wird der Amplitudenschwellwert in Abhängigkeit von einem zeitlichen Verlauf der Amplituden angepasst. Insbesondere können dadurch Langzeitveränderungen, insbesondere hinsichtlich der Korrosion der Strahlrohrleitung bei der Baggererkennung berücksichtigt werden. Vorteilhaft kommt es somit nicht zu Fehlalarmen.

In einer vorteilhaften Ausführungsform wird in einem ersten Zeitraum eine erste Amplitude ermittelt. In einem zweiten Zeitraum wird eine zweite Amplitude ermittelt. Die kurzfristige hochohmige Erdung des Objekts wird bei einem Überschreiten eines Differenzschwellwerts durch die Differenz der ersten Amplitude und der zweiten Amplitude ermittelt. Damit können vorteilhaft mittel- und langfristige Änderungen bezüglich des elektrisch leitfähigen und durch kathodischen Korrosionsschutz geschützten Objekts ermittelt werden.

In einer vorteilhaften Ausführungsform wird das Frequenzspektrum, insbesondere die Amplitude, mit einem Zeitabstand von 50 ms bis 500 ms ermittelt. Durch diesen Zeitabstand ist sichergestellt, dass ein Baggerangriff oder eine sonstige hochohmige Erdung erkannt werden kann.

In einer vorteilhaften Ausführungsform wird das elektrische Prüfsignal in Form eines Stroms an einer Leitung zwischen einer Stromquelle und dem Objekt gemessen. Aufgrund der Änderung des Stroms als Prüfsignal ist es möglich, Rückschlüsse auf den Zustand des kathodisch geschützten Objekts zu ziehen. Eine Feststellung einer Stromänderung zeigt vorteilhaft an, ob ein elektrisch leitender Fremdkontakt, beispielsweise in Form eines Baggerangriffs, stattgefunden hat bzw. stattfindet. Der physikalische Zusammenhang wird durch das Ohmsche Gesetz beschrieben, wobei sich der Schutzstrom als Prüfsignal aus der Division der kathodischen Schutzspannung durch den Ausbreitungswiderstand des kathodisch geschützten Objekts ergibt. Zu einer Bewertung des Zustandes des Schutzobjekts kann vorteilhaft zusätzlich die Schutzspannung in die Auswertung miteinbezogen werden. Die Auswertung der Amplitude des Frequenzspektrums der Spannung stellt ebenfalls Informationen für die Zustandsbewertung und für die Erkennung von Fremdeinflüssen auf das kathodisch geschützte Objekt bereit.

Darüber hinaus kann eine Messung und/oder Auswertung der Frequenzspektrum-Amplitude des eingespeisten Stromes als Prüfsignal für die Erkennung von Fremdeinflüssen wie Baggerangriffen auch an einer Stelle des kathodisch geschützten Objekts erfolgen, die beabstandet von einem Anschluss des Schutzstromgeräts ist. So kann insbesondere die Ortung des Baggerangriffes durch einen Vergleich von Messungen, die an verschiedenen Stellen des kathodisch geschützten Objekts durchgeführt wurden, verbessert werden. Beispielsweise kann der Ort des Baggerangriffs zwischen zwei benachbarten Messstellen lokalisiert werden, wenn diese beiden Messstellen einen gegenüber anderen Messstellen erhöhten Amplitudenwert des Prüfsignals im gleichen Zeitfenster aufweisen.In einer vorteilhaften Ausführungsform wird dem Objekt ein elektrisches Schutzsignal zum kathodischen Korrosionsschutz zugeführt. In einer vorteilhaften Ausführungsform weist das Schutzsignal die Prüffrequenz auf. Vorteilhaft muss in dieser Ausführungsform kein zusätzliches Prüfsignal zu dem Schutzsignal auf das elektrisch leitfähige und durch kathodischen Korrosionsschutz geschützte Objekt aufgebracht werden.

In einer vorteilhaften Ausführungsform wird das Schutzsignal mit einem weiteren Signal verknüpft, wobei das weitere Signal die Prüffrequenz aufweist.

Durch das weitere Signal ist die Prüffrequenz vorteilhaft einstellbar. Des Weiteren wird das Schutzsignal von dem weiteren Signal entkoppelt, was sowohl Vorteile bei der Einstellung des Schutzsignals als auch bei der Einstellung des weiteren Signals und des gemessenen Prüfsignals mit sich bringt.

So kann beispielsweise die Prüffrequenz vorteilhaft auf einen Wert eingestellt werden, in dem keine Signale mit Störfrequenzen im Bereich der Prüffrequenz erwartet werden. In einer vorteilhaften Ausführungsform ist die Prüffrequenz beabstandet zu einer Störfrequenz und/oder beabstandet zu den Oberwellen der Störfrequenz gewählt. Hierdurch wird vorteilhaft sichergestellt, dass es zu keiner Fehlermittlung des Zustandes des elektrisch leitfähigen und durch kathodischen Korrosionsschutz geschützten Objekts kommt.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Hierbei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Zeichnung bzw. in der Beschreibung. Es werden für funktionsäquivalente Größen und Merkmale in allen Figuren auch bei unterschiedlichen Ausführungsformen die gleichen Bezugszeichen verwendet.

Nachfolgend werden beispielhafte Ausführungsformen der Erfindung unter Bezugnahme auf die Zeichnung erläutert. In der Zeichnung zeigen:
Figur 1 ein schematisch dargestelltes Verfahren;
Figur 2 ein schematisches Ersatzschaltbild für ein kathodisch geschütztes Objekt mit einer hochohmigen Umhüllungsfehlstelle;
Figur 3 schematisch eine Schutzvorrichtung zum kathodischen Korrosionsschutz; und
Fig. 4 ein schematisch dargestelltes Spannungs- und Amplitudendiagramm.

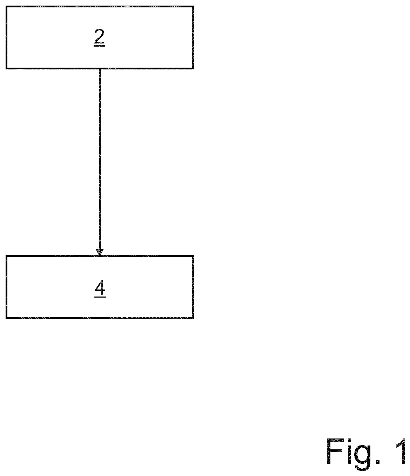

Figur 1 zeigt ein Verfahren zur Ermittlung eines Zustands eines elektrisch leitfähigen und durch kathodischen Korrosionsschutz geschützten Objekts, insbesondere einer Stahlrohrleitung zum Transport von Gas, die im Erdreich verlegt ist. Ein elektrisches Prüfsignal wird bezüglich des Objekts in einem Schritt 2 gemessen. In einem folgenden Schritt 4 wird der Zustand des Objekts in Abhängigkeit von einem zeitlichen Verlauf eines Frequenzspektrums des elektrischen Prüfsignals ermittelt.

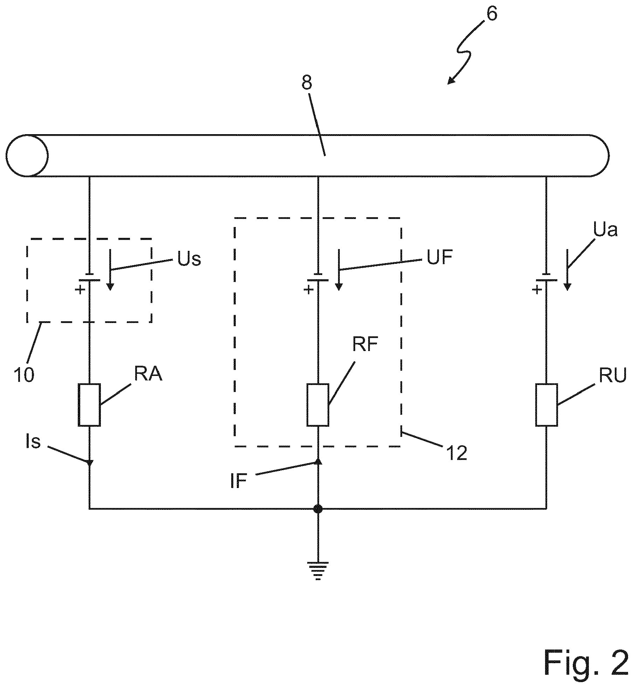

Figur 2 zeigt ein schematisches Ersatzschaltbild 6 für eine kathodisch geschützte Rohrleitung 8. Selbstverständlich kann anstatt der Rohrleitung 8 auch jegliches anderes elektrisch leitfähige und durch kathodischen Korrosionsschutz geschützte Objekt verwendet werden. Eine Schutzvorrichtung 10 zum kathodischen Korrosionsschutz der Rohrleitung 8 stellt eine Ausgangsspannung Us bereit, die sich ohne eine Umhüllungsfehlstelle 12 einstellt. Ein Schutzstrom Is fließt von der Schutzvorrichtung 10 über einen Ausbreitungswiderstand RA in Richtung Erdreich, wobei der Schutzstrom Is ohne die Umhüllungsfehlstelle 12 angenommen wird. Ebenso wird ein Ausschaltpotenzial Ua und ein Umhüllungswiderstand Ru der Rohrleitung 8 ohne die Umhüllungsfehlstelle 12 angenommen.

Tritt nun eine Umhüllungsfehlstelle 12 während des Betriebs der Rohrleitung 8 mit der Schutzvorrichtung 10 auf, so wird eine Parallelschaltung der Umhüllungsfehlstelle 12, wie in Figur 2 gezeigt, angenommen. Ein Fehlerstrom IF fließt in die Umhüllungsfehlstelle 12 hinein. Die Umhüllungsfehlstelle 12 ist durch ein Potential UF und einen Ausbreitungswiderstand RF charakterisiert. Die Auswirkungen der Umhüllungsfehlstelle 12 auf die Rohrleitung 8 aufgebrachte Schutzsignale sind aufgrund eines im Vergleich zum Widerstand RU hochohimgen Widerstands RF gering. Bei einem kurzzeitigen Auftreten einer Umhüllungsfehlstelle 12, wie beispielsweise eines Baggerangriffs, muss das elektrische Prüfsignal entsprechend häufig gemessen und ausgewertet werden, um den Zustand des elektrisch leitfähigen und durch kathodischen Korrosionsschutz geschützten Objekts in Form der Rohrleitung 8 zuverlässig zu ermitteln. Eine kurzfristige hochohmige Erdung in Form eines Baggerangriffs kann durch die hier vorgestellten Verfahren erkannt und somit ein potentiell mangelhafter Zustand des Objekts 8 erkannt werden. Beispielsweise kann durch einen Baggerangriff die Rohrleitung zerstört werden.

Bei mittel- oder langfristigen Änderungen des Umhüllungswiderstandes Ru kann ebenso die Figur 2 zur Erläuterung herangezogen werden. Kurzfristige Änderungen des Zustands beispielsweise in Form des Baggerangriffs, spielen sich im Bereich von Sekunden ab, wohingegen die mittel- und langfristigen Änderungen beispielsweise eine durch Umwelteinflüsse sich langsam zerstörende Umhüllung der Rohrleitung und/oder unterschiedliche Beschaffenheit des Erdreichs wie z.B. Feuchtigkeit, Säure, Bakterienbefall das Objekt 8 betreffen und sich im Zeitraum von Monaten oder Jahren vollziehen. Entsprechend verändert sich die Spannung UF und der Widerstand RF der Umhüllungsfehlstelle 12 nur langsam.

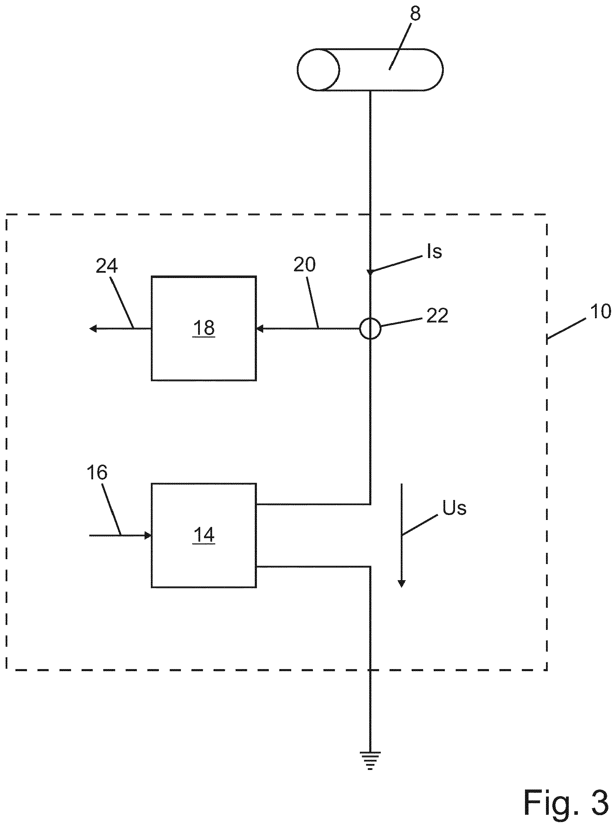

Figur 3 zeigt eine Schutzvorrichtung 10, die zwischen Erde bzw. einer Anode und dem Objekt 8 angeordnet ist. Zur Erzeugung des elektrischen Schutzsignals in Form des Schutzstroms Is umfasst die Schutzvorrichtung 10 eine Schutzsignal-Einheit 14, wobei die Schutzsignal-Einheit 14 mit einem entsprechenden Erzeugungssignal 16 beaufschlagt wird. An der Schutzsignal-Einheit 14 fällt die Ausgangsspannung Us ab.

Des Weiteren umfasst die Schutzvorrichtung 10 eine Prüfvorrichtung 18, der ein Prüfsignal 20 eines Sensors 22 zugeführt wird. Der Sensor 22 ist zwischen der Schutzsignal-Einheit 14 und dem Objekt 8 angeordnet, misst vorliegend den Schutzstrom Is und gibt ein entsprechendes elektrisches Prüfsignal 20 an die Prüfvorrichtung 18 weiter. Die Prüfvorrichtung 18 ermittelt dann den Zustand 24 des Objekts 8 in Form eines entsprechenden Signals. Der Zustand 24 umfasst damit das Vorliegen einer Umhüllungsfehlstelle 12 und das Nicht-Vorliegen einer Umhüllungsfehlstelle 12. Somit wird das elektrische Prüfsignal 20 in Form des Schutzstroms Is an einer Leitung zwischen der Stromquelle 14 und dem Objekt 8 und damit bezüglich des Objekts 8 gemessen. Selbstverständlich kann der Sensor 22 auch zwischen Erde und der Schutzsignal-Einheit 14 angeordnet werden. Selbstverständlich kann der Schutzstrom Is sowohl das Schutzsignal an sich umfassen, jedoch ist es auch möglich, dass zusätzlich zu dem Schutzsignal ein weiteres Signal auf die Rohrleitung 8 aufgebracht wird, um mittels der Prüfvorrichtung 18 ausgewertet zu werden. Selbstverständlich sind auch andere Ausführungen denkbar, beispielsweise können die Prüfvorrichtung 18 und die Schutzsignal-Einheit 14 in unterschiedlichen Geräten ausgebildet sein.

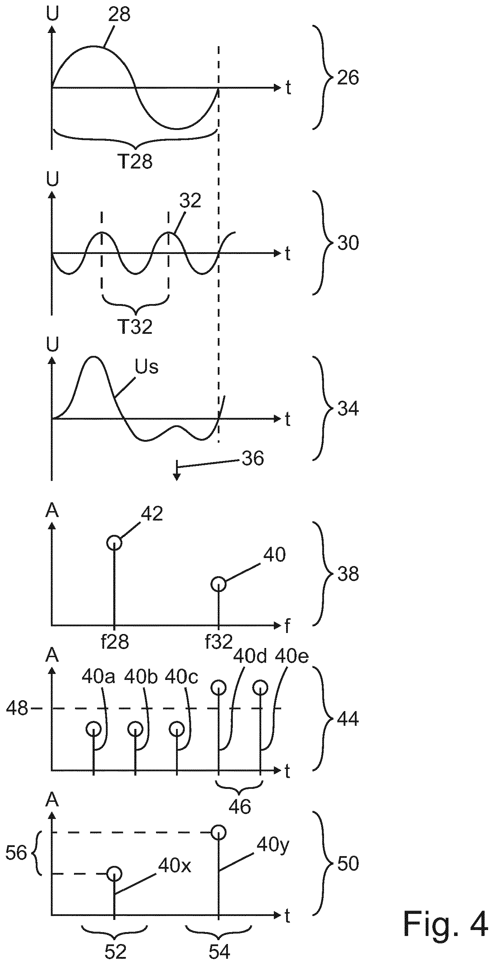

Figur 4 zeigt beispielhaft mehrere Spannungs- und Amplitudendiagramme, die im Folgenden zur Erläuterung der Funktion der Schutzsignal-Einheit 14 und der Prüfvorrichtung 18 dienen. In einem Spannungs-Zeitdiagramm 26 ist eine idealisierte beispielhaft gezeigte sinusförmige Schutzspannung 28, die auch als Schutzsignal 28 bezeichnet wird, abgebildet. Die Schutzspannung 28 hat eine Periodendauer T28. In einem Spannungs-Zeitdiagramm 30 ist eine Prüfspannung 32 abgebildet, die ebenfalls sinusförmig idealisiert dargestellt ist. Die Prüfspannung 32 weist eine Periodendauer T32 auf. In einem Spannungs-Zeitdiagramm 34 ist die Addition der Spannungen 28 und 32 zu der Ausgangsspannung Us gezeigt. Die Zeitachse der Diagramme 26, 30 und 34 ist im Wesentlichen gleich dimensioniert und betreffen die Funktion der Schutzsignal-Einheit 14.

Gemäß einem Pfeil 36 ergibt sich ein Amplituden-Frequenzdiagramm 38, das in der Prüfvorrichtung 18 ermittelt wird. Der Pfeil 36 betrifft die zur Figur 2 erläuterte Wirkbeziehung zwischen der Fehlerstelle 12 und einem dem Objekt 8 zugeführten Prüfsignal 28, was sich in einem gemessen Schutzstrom Is niederschlägt. Die Amplituden 40 und 42 des Diagramms 38 ergeben sich aus einem Zeitfenster, das beispielsweise vom aktuellen Zeitpunkt ausgehend zurück 250 ms des gemessenen Schutzstroms Is bzw. des gemessenen Prüfsignals 20 umfasst. Bei einer sequenziellen Aneinanderreihung von derartigen Zeitfenstern entspricht dies einer Ermittlungsfrequenz des Frequenzspektrums gemäß dem Diagramm 38 bzw. einer Amplitude 40, 42 von vier Hz. Selbstverständlich können auch sich überlappende Zeitfenster verwendet werden.

Die Amplitude 40 befindet sich bei einer Frequenz f32 und ergibt sich entsprechend aus der aufgebrachten Prüfspannung 32. Die Amplitude 42 hingegen befindet sich bei der Frequenz f28 und ergibt sich entsprechend der auf das Objekt 8 aufgebrachten Schutzspannung 28. Eine Umhüllungsfehlstelle 12 schlägt sich sowohl in der Amplitude 42 als auch in der Amplitude 40 nieder und kann durch eine Beobachtung eines zeitlichen Verlaufs des Frequenzspektrums 38 ermittelt werden.

Ein Diagramm 44 zeigt den zeitlichen Verlauf in beispielhafter Weise der Amplitude 40. Die Amplitude 40 überschreitet zu den Zeitpunkten 46 in dem Zeitfenster zwei Mal, nämlich mit den Amplituden 40d und 40e einen Amplitudenschwellwert 48. In einer anderen Ausführungsform wird ein Amplitudenschwellwert unterschritten. Mittels dieses Überschreitens oder Unterschreitens des Amplitudenschwellwerts 48 wird ein mangelhafter Zustand 24 des Objekts 8 erkannt. Insbesondere kann in dem Zeitfenster 46 festgestellt werden, dass eine kurzfristige Zustandsänderung im Sekundenbereich eingetreten ist.

In einer weiteren vorteilhaften Ausführungsform wird kein zusätzliches Signal im Sinne einer Prüfspannung 32 auf die Schutzspannung 28 aufgebracht und es wird der zeitliche Verlauf der Amplitude 42 analog zum Beispiel der Amplitude 40 ausgewertet.

Ein Diagramm 50 zeigt einen mittel- bis langfristigen Verlauf der Amplitude 40. Selbstverständlich kann auch ein Verlauf der Amplitude 42 verwendet werden. Die Amplituden 40x und 40y werden in jeweiligen Zeiträumen 52 und 54 ermittelt. Die Zeiträume 52 und 54 betreffen Zeiträume im Bereich von Wochen bzw. Monaten oder aber Jahren. Die Amplitude 40x, 40y wird innerhalb des Zeitraums 52, 54 beispielsweise über Mittelwertbildung über mehrere gemäß Diagramm 38 ermittelte Amplituden 40 oder aber durch zufällige Aufnahme eines Wertes der Amplitude 40 ermittelt. Überschreitet eine Differenz 56 zwischen den Amplituden 40x und 40y einen Differenzschwellwert, so wird ein mangelhafter Zustand des Objekts 8 in Form einer Umhüllungsfehlstelle 12 ermittelt. Selbstverständlich kann das Diagramm 50 auch auf eine Amplitude 42 angewendet werden.

Die Frequenz f32 bzw. die Periodendauer T32 oder aber die Frequenz f28 und die Periodendauer T28 werden bevorzugt beabstandet zu einer Störfrequenz gewählt. Des Weiteren werden diese Prüffrequenzen f28 und/oder f32 auch beabstandet zu den Oberwellen der Störfrequenz gewählt. Typische Störfrequenzen sind beispielsweise im Bereich von 16 2/3 Hz verursacht durch Bahndrehstrom oder im Bereich von 50 Hz verursacht durch Mittel- und Hochspannungsstromnetze zu finden.

In einer Ausführungsform wird die Schutzspannung 28 als Gleichspannung gewählt und die Prüfspannung 32 auf die Gleichspannung 28 addiert. Entsprechend wird in dieser Ausführungsform nur die Amplitude 40 ausgewertet.

In einer Ausführungsform hat die Schutzspannung 28 die Prüffrequenz f28 und es wird die Amplitude 42 im Bereich der Prüffrequenz f28 ausgewertet. In dieser Ausführungsform wird kein Spannungsverlauf 32 zu dem Spannungsverlauf 28 addiert.

## Patentansprüche

1. Verfahren zur Ermittlung eines Zustands (12) eines elektrisch leitfähigen und durch kathodischen Korrosionsschutz geschützten Objekts (8), insbesondere einer Stahlrohrleitung, wobei ein elektrisches Prüfsignal (20) bezüglich des Objekts (8) gemessen (2) wird, **dadurch gekennzeichnet,**
- **dass** der Zustand (12) des Objekts (8) in Form einer kurzfristigen hochohmigen Erdung des Objekts (8) in Abhängigkeit von einem zeitlichen Verlauf einer Amplitude (40; 42) im Bereich einer Prüffrequenz (f32; f28) eines Frequenzspektrums (38) des elektrischen Prüfsignals (20) ermittelt wird,
- **dass** die kurzfristige hochohmige Erdung des Objekts (8) in Abhängigkeit von einem Überschreiten eines Amplitudenschwellwerts (48) durch die Amplitude (40) ermittelt wird, und
- **dass** ein Eintritt der kurzfristigen hochohmigen Erdung des Objekts (8) im Sekundenbereich festgestellt wird.

2. Verfahren nach Anspruch 1, wobei der Amplitudenschwellwert (48) in Abhängigkeit von Amplituden (40) des zeitlichen Verlaufs, insbesondere durch eine Mittelwertbildung über die Amplituden (40), angepasst wird.

3. Verfahren nach Anspruch 1, wobei in einem ersten Zeitraum (52) eine erste Amplitude (40x) ermittelt wird, wobei in einem zweiten Zeitraum (54) eine zweite Amplitude (40y) ermittelt wird, und wobei die kurzfristige hochohmige Erdung des Objekts (8) bei einem Überschreiten eines Differenzschwellwerts durch die Differenz (56) der ersten Amplitude (40x) und der zweiten Amplitude (40y) ermittelt wird.

4. Verfahren nach einem der Ansprüche 1 bis 3, wobei das Frequenzspektrum (38), insbesondere die Amplitude (40; 42), mit einem Zeitabstand kleiner 10 s, insbesondere mit einem Zeitabstand kleiner 3 s, insbesondere mit einem Zeitabstand kleiner 500 ms, insbesondere mit einem Zeitabstand kleiner 250 ms, ermittelt wird.

5. Verfahren nach einem der vorstehenden Ansprüche, wobei das elektrische Prüfsignal (20) in Form eines Stroms (Is), insbesondere an einer Leitung zwischen einer Schutzsignal-Einheit (14) und dem Objekt (8), gemessen wird.

6. Verfahren nach einem der Ansprüche 1 bis 4, wobei das elektrische Prüfsignal (20) in Form einer Spannung (Us) zwischen dem Objekt (8) und einer Anode während einer Schutzstromeinspeisung und/oder während keiner Schutzstromeinspeisung gemessen wird.

7. Verfahren nach einem der vorstehenden Ansprüche, wobei dem Objekt (8) ein elektrisches Schutzsignal (Us; 28) zum kathodischen Korrosionsschutz, KKS, zugeführt wird.

8. Verfahren nach Anspruch 7, wobei das Schutzsignal (Us; 28) die Prüffrequenz (f28) aufweist.

9. Verfahren nach Anspruch 7, wobei das Schutzsignal (Us; 28) mit einem weiteren Signal (32) verknüpft wird, und wobei das weitere Signal (32) die Prüffrequenz (f32) aufweist.

10. Verfahren nach Anspruch 8 oder 9, wobei die Prüffrequenz (f32; f28) beabstandet zu einer Störfrequenz, insbesondere beabstandet zu einer Frequenz von 16 2/3 Hz und/oder einer Frequenz von 50 Hz, und beabstandet zu den Oberwellen der Störfrequenz gewählt wird.

11. Vorrichtung (10), insbesondere Prüfvorrichtung und/oder Schutzvorrichtung zum kathodischen Korrosionsschutz, zur Ermittlung eines Zustands (12) eines elektrisch leitfähigen und durch kathodischen Korrosionsschutz geschützten Objekts (8), insbesondere einer Stahlrohrleitung, wobei die Vorrichtung (10) dazu ausgebildet ist, ein elektrisches Prüfsignal (20) bezüglich des Objekts (8) zu messen, **dadurch gekennzeichnet,**
- **dass** die Vorrichtung (10) dazu ausgebildet ist, den Zustand (12) des Objekts (8) in Form einer kurzfristigen hochohmigen Erdung des Objekts (8) in Abhängigkeit von einem zeitlichen Verlauf einer Amplitude (40; 42) im Bereich einer Prüffrequenz (f32; f28) eines Frequenzspektrums (38) des elektrischen Prüfsignals (20) zu ermitteln,
- **dass** die Vorrichtung (10) dazu ausgebildet ist, die kurzfristige hochohmige Erdung des Objekts (8) in Abhängigkeit von einem Überschreiten eines Amplitudenschwellwerts (48) durch die Amplitude (40) zu ermitteln, und
- **dass** die Vorrichtung (10) dazu ausgebildet ist, einen Eintritt der kurzfristigen hochohmigen Erdung des Objekts (8) im Sekundenbereich festzustellen.

12. Vorrichtung (10) nach Anspruch 11, die zur Ausführung des Verfahrens nach einem der Ansprüche 2 bis 10 ausgebildet ist.

## Claims

1. Method for determining a condition (12) of an electrically conductive object (8) protected by cathodic corrosion protection, in particular a steel tube, wherein an electric test signal (20) related to the object (8) is measured (2), **characterized in**
- **that** the condition (12) of the object (8) is determined in the form of a short-time high-impedance grounding of the object (8) in dependence on the course of an amplitude (40; 42) over time in the region of the test frequency (f32; f28) of a frequency spectrum (38) of the electric test signal (20),
- **that** the short-time high-impedance grounding of the object (8) is determined in dependence on an exceeding of the amplitude threshold (48) by the amplitude (40), and
- **that** the occurrence of the short-time high-impedance grounding of the object (8) is determined in the range of seconds.

2. Method as claimed in claim 1, wherein the amplitude threshold (48) is adapted in dependence on amplitudes (40) over time, in particular by forming a mean value over the amplitudes (40).

3. Method as claimed in claim 1, wherein in a first time period (52) a first amplitude (40x) is determined, wherein in a second time period a second amplitude (40y) is determined, and wherein the short-time high-impedance grounding of the object (8) is determined by means of the difference (56) between the first amplitude (40x) and the second amplitude (40y) when a difference threshold is exceeded.

4. Method as claimed in one of claims 1 to 3, wherein the frequency spectrum (38), in particular the amplitude (40; 42) is determined in a time interval of less than 10 s, in particular in a time interval of less than 3 s, in particular in a time interval of less than 500 ms, in particular in a time interval of less than 250 ms.

5. Method as claimed in one of the preceding claims, wherein the electric test signal (20) is measured in the form of a current (Is), in particular on a line between a protective signal unit (14) and the object (8).

6. Method as claimed in one of claims 1 to 4, wherein the electric test signal (20) is measured in the form of a voltage (Us) between the object (8) and an anode while protective current is fed and/or while protective current is not fed.

7. Method as claimed in 1 of the preceding claims, wherein an electric protective signal (Us; 28) for cathodic corrosion protection (KKS) is supplied to the object.

8. Method as claimed in claim 7, wherein the protective signal (Us; 28) comprises the test frequency (f28).

9. Method as claimed in claim 7, wherein the protective signal (Us; 28) is coupled with an additional signal (32) and wherein the additional signal (32) comprises the test frequency (f32).

10. Method as claimed in claim 8 or 9, wherein the test frequency (f32; f28) is chosen so as to be spaced apart from a interfering frequency, in particular spaced apart from a frequency of 16 2/3 Hz and/or a frequency of 50 Hz, and spaced apart of the harmonics of the interfering frequency.

11. Device (10), in particular test device and/or protective device for cathodic corrosion protection, for determining a condition (12) of an electrically conductive object (8) protected by cathodic corrosion protection, in particular a steel tube, wherein the device (10) is adapted for measuring an electric test signal (20) related to the object (8), **characterized in**
- **that** the device (10) is adapted to determine the condition (12) of the object (8) in the form of a short-time high-impedance grounding of the object (8) in dependence on the course of an amplitude (40; 42) over time in the region of the test frequency (f32;f28) of a frequency spectrum (38) of the electric test signal (20),
- **that** the device (10) is adapted to determine the short-time high-impedance grounding of the object (8) in dependence on an exceeding of the amplitude threshold (48) by the amplitude (40), and
- **that** the device (10) it is adapted to determine the occurrence of the short-time high-impedance grounding of the object (8) in the range of seconds.

12. Device (10) as claimed in claim 11 which is adapted to execute the method according to one of claims 2 to 10.

## Revendications

1. Procédé de détermination d'un état (12) d'un objet (8) électro-conducteur et protégé par une protection cathodique, en particulier d'une conduite en acier, dans lequel un signal d'essai électrique (20) par rapport à l'objet (8) est mesuré (2), **caractérisé en ce**
- **que** l'état (12) de l'objet (8) sous forme d'une mise à la terre à haute impédance de courte durée de l'objet (8) est déterminé en fonction d'une variation temporelle d'une amplitude (40; 42) dans le domaine d'une fréquence d'essai (f32; f28) d'un spectre de fréquence (38) du signal d'essai électrique (20),
- **que** la mise à la terre à haute impédance de courte durée de l'objet (8) est déterminée en fonction d'un dépassement d'une valeur seuil d'amplitude (48) par l'amplitude (40), et
- **qu'**une entrée de la mise à la terre à haute impédance de courte durée de l'objet (8) dans la plage des secondes est établie.

2. Procédé selon la revendication 1, dans lequel la valeur seuil d'amplitude (48) est adaptée en fonction des amplitudes (40) de la variation temporelle, en particulier par une formation de valeurs moyennes sur les amplitudes (40).

3. Procédé selon la revendication 1, dans lequel une première amplitude (40x) est déterminée dans un premier laps de temps (52), dans lequel une deuxième amplitude (40y) est déterminée dans un deuxième laps de temps (54), et dans lequel la mise à la terre à haute impédance de courte durée de l'objet (8) lors d'un dépassement d'une valeur seuil différentielle est déterminée par la différence (56) de la première amplitude (40x) et de la deuxième amplitude (40y).

4. Procédé selon l'une quelconque des revendications 1 à 3, dans lequel le spectre de fréquence (38), en particulier l'amplitude (40; 42), est déterminé avec un intervalle de temps inférieur à 10 s, en particulier avec un intervalle de temps inférieur à 3 s, en particulier avec un intervalle de temps inférieur à 500 ms, en particulier avec un intervalle de temps inférieur à 250 ms.

5. Procédé selon l'une quelconque des revendications précédentes, dans lequel le signal d'essai électrique (20) est mesuré sous forme d'un courant (Is), en particulier sur une ligne entre une unité de signal de protection (14) et l'objet (8).

6. Procédé selon l'une quelconque des revendications 1 à 4, dans lequel le signal d'essai électrique (20) est mesuré sous forme d'une tension (Us) entre l'objet (8) et une anode pendant une injection de courant de protection et/ou pendant aucune injection de courant de protection.

7. Procédé selon l'une quelconque des revendications précédentes, dans lequel un signal de protection électrique (Us; 28) pour la protection cathodique, KKS, est amené à l'objet (8) .

8. Procédé selon la revendication 7, dans lequel le signal de protection (Us; 28) présente la fréquence d'essai (f28) .

9. Procédé selon la revendication 7, dans lequel le signal de protection (Us; 28) est combiné à un autre signal (32), et dans lequel l'autre signal (32) présente la fréquence d'essai (f32).

10. Procédé selon la revendication 8 ou 9, dans lequel la fréquence d'essai (f32; f28) est sélectionnée de manière à être distante d'une fréquence parasite, en particulier distante d'une fréquence de 16 2/3 Hz et/ou d'une fréquence de 50 Hz, et distante des harmoniques de la fréquence parasite.

11. Dispositif (10), en particulier dispositif d'essai et/ou dispositif de protection pour la protection cathodique, destiné à déterminer un état (12) d'un objet (8) électro-conducteur et protégé par une protection cathodique, en particulier d'une conduite en acier, dans lequel le dispositif (10) est conçu pour mesurer un signal d'essai électrique (20) par rapport à l'objet (8), **caractérisé en ce**
- **que** le dispositif (10) est conçu pour déterminer l'état (12) de l'objet (8) sous forme d'une mise à la terre à haute impédance de courte durée de l'objet (8) en fonction d'une variation temporelle d'une amplitude (40; 42) dans le domaine d'une fréquence d'essai (f32; f28) d'un spectre de fréquence (38) du signal d'essai électrique (20),
- **que** le dispositif (10) est conçu pour déterminer la mise à la terre à haute impédance de courte durée de l'objet (8) en fonction d'un dépassement d'une valeur seuil d'amplitude (48) par l'amplitude (40), et
- **que** le dispositif (10) est conçu pour établir une entrée de la mise à la terre à haute impédance de courte durée de l'objet (8) dans la plage des secondes.

12. Dispositif (10) selon la revendication 11, qui est conçu pour mettre en œuvre le procédé selon l'une quelconque des revendications 2 à 10.
